# EUROPÄISCHE PATENTSCHRIFT

(11) **EP 1 092 179 B1**
(45) Veröffentlichungstag und Bekanntmachung des Hinweises auf die Patenterteilung: **07.08.2002**
(21) Anmeldenummer: 99928001.9
(22) Anmeldetag: 17.06.1999
(51) Int. Cl.: G05B 19/418

(54) **VERFAHREN ZUR BEREITSTELLUNG VON FERTIGUNGSBEZOGENEN DATEN IN EINER SERIENFERTIGUNG VON FERTIGUNGSOBJEKTEN, INSBESONDERE VON KRAFTFAHRZEUGEN**
METHOD FOR PROVIDING MANUFACTURING-RELATED DATA IN LARGE-SCALE PRODUCTION OF MANUFACTURED OBJECTS, ESPECIALLY AUTOMOBILES
PROCEDE PERMETTANT DE FOURNIR DES DONNEES RELATIVES A LA FABRICATION DURANT LA FABRICATION EN SERIE D'OBJETS, NOTAMMENT D'AUTOMOBILES

(30) Priorität: 01.07.1998 DE 19829366
(43) Veröffentlichungstag der Anmeldung: 18.04.2001
(73) Patentinhaber: Gleis, Stefan, 30161 Hannover (DE)
(72) Erfinder: Gleis, Stefan, 30161 Hannover (DE)
(74) Vertreter: Wagner, Carsten
(86) Internationale Anmeldenummer: EP9904198
(87) Internationale Veröffentlichungsnummer: WO0003313

(56) Entgegenhaltungen:
- DE-A- 4 113 556
- GB-A- 2 239 723
- GB-A- 2 279 775
- PATENT ABSTRACTS OF JAPAN vol. 010, no. 291 (M-522), 3. Oktober 1986 (1986-10-03) & JP 61 108079 A (NISSAN MOTOR CO LTD), 26. Mai 1986 (1986-05-26)
- GEH A: "DAS PLUS FUER JEDE SPS. DEN MATERIALFLUSS OPTIMAL VERFOLGEN UND ZIELGERECHT STEUERN" ELEKTRONIK, Bd. 43, Nr. 7, 5. April 1994 (1994-04-05), Seiten 74/75, 80-82, XP000443102 ISSN: 0013-5658

## Beschreibung

Die Erfindung betrifft ein Verfahren zur Bereitstellung von fertigungsbezogenen Daten in einer Serienfertigung von Fertigungsobjekten, insbesondere von Kraftfahrzeugen.

Bei der Herstellung von Kraftfahrzeugen in einer Serienfertigung ist es bekannt, jedem Fahrzeug eine sogenannte Wagenbegleitkarte zuzuordnen, die das Fahrzeug beim Durchlaufen von Fertigungsabschnitten, beispielsweise beim Durchlaufen unterschiedlicher Abschnitte der Vormontage und der Endmontage, begleitet und diesem Fahrzeug fest zugeordnet ist. Auf der Wagenbegleitkarte werden in den unterschiedlichen Fertigungsabschnitten Beanstandungen der in diesen Fertigungsabschnitten beschäftigten Werker eingetragen. Diese Beanstandungen können beispielsweise Fehler an in der Serienfertigung verwendeten Bauteilen oder Gruppen von Bauteilen betreffen. Beispielsweise kann in der Wagenbegleitkarte vermerkt werden, daß ein betreffendes Bauteil, beispielsweise ein Luftfilter, beschädigt ist oder einen sonstigen Fehler aufweist, beispielsweise verschmutzt ist. Das gleiche gilt für Gruppen von Bauteilen, beispielsweise Standheizungen oder Klimaanlagen. Ferner kann in der Wagenbegleitkarte das Fehlen von Bauteilen vermerkt sein, wenn ein in einem bestimmtem Fertigungsabschnitt benötigtes Bauteil nicht zur Verfügung steht.

Nach Durchlaufen von Fertigungsabschnitten der Serienfertigung kann die Wagenbegleitkarte aus dem Fahrzeug entnommen werden, so daß dann eine Auflistung von dieses Fahrzeug betreffenden Beanstandungen zur Verfügung steht und anhand der Wagenbegleitkarte die erforderlichen Nacharbeiten, beispielsweise das Ersetzen fehlerhafter Bauteile, der Einbau fehlender Bauteile oder sonstige Nachbesserungen, geplant und in die Wege geleitet werden können. Nach Durchführung der Nacharbeiten wird die Wagenbegleitkarte dann für einen bestimmten Zeitraum archiviert.

Ein Nachteil dieses bekannten Verfahrens besteht darin, daß das Eintragen der Beanstandungen auf der Wagenbegleitkarte aufwendig, mühsam und fehleranfällig ist, da die Wagenbegleitkarte aufgrund der hohen Anzahl von in der Serienfertigung verwendeten Bauteilen insbesondere bei Kraftfahrzeugen umfangreich ist. Sie kann beispielsweise aus einer Mehrzahl von DIN A4-Blättern bestehen, was die Orientierung insbesondere unter Zeitdruck erschwert.

Ein weiterer Nachteil des bekannten Verfahrens besteht darin, daß die auf der Wagenbegleitkarte eingetragenen Beanstandungen der Werker zur Planung von Nacharbeiten nicht zur Verfügung stehen, wenn sich die Wagenbegleitkarte anderweitig in Benutzung befindet, beispielsweise dann, wenn ein Werker gerade Eintragungen auf der Wagenbegleitkarte vornimmt. Aus diesem Grunde sind bei dem bekannten Verfahren innerhalb des Fertigungsprozesses Anlaufstellen vorgesehen, an denen die Wagenbegleitkarte entnommen und die erforderlichen Nacharbeiten entsprechend den auf der Wagenbegleitkarte vermerkten Beanstandungen der Werker geplant werden. Im Ergebnis Stehen die fertigungsbezogenen Daten für die Planung der Nacharbeiten nur an den Anlaufpunkten bereit. Dies ist unpraktisch und erschwert die Planung der Nacharbeiten.

Durch "Patent Abstracts of Japan", Nr. 61108073, und DE 41 13 556 Al, die auf die vorgenannte Veröffentlichung Bezug nimmt, ist ein Verfahren zur Bereitstellung von fertigungsbezogenen Daten in einer Serienfertigung von Kraftfahrzeugen bekannt, bei dem jedem Kraftfahrzeug während des Fertigungsprozssses eine das Kraftfahrzeug begleitende bewegliche Kommunikationsvorrichtung zugeordnet wird.

Ein ähnliches Verfahren ist durch GB 2 279 775 A bekannt.

Der vorliegenden Erfindung liegt die Aufgabe zugrunde, ein Verfahren der betreffenden Art anzugeben, das die Nachteile des bekannten Verfahrens nicht aufweist, bei dem also die Erfassung und Bereitstellung von fertigungsbezogenen Daten erleichtert ist.

Diese Aufgabe wird durch die im Anspruch 1 angegebene Lehre gelöst.

Anstelle einer wagenbegleitkarte aus Papier sieht die Erfindung eine Datenerfasaungseinrichtung vor, die, ebenso wie die Wagenbegleitkarte bei dem bekennten Verfahren, einem Fertigungsobjekt, beispielsweise einem Kraftfahrzeug, zugeordnet wird. In die Datenerfassungseinrichtung können in den unterschiedlichen Fertigungsabschnitten Werker fentigungsbezogene Daten in Form von Beanstandungen eintragen, sofern in dem jeweiligen Fertigungsabschnitt ein Fehler aufgetreten ist. Die Eingabe kann beispielsweise über eine Tastatur oder einen Touchscrecn der Datenerfassungseinrichtung erfolgen.

Die Erfindung sieht weiter vor, daß die Daten während des Fertigungsprozesses wenigstens teilweise von der Datenerfassungseinrichtung zu wenigstens einer zentralen Einrichtung übertragen werden, was beispielsweise per Funk geschehen kann.

An der zentralen Einrichtung stehen die fertigungsbezogenen Daten dann zentral zur Verfügung und können für die Planung gegebenenfalls erforderlicher Nacharbeiten herangezogen werden.

Da die Daten erfindungsgemäß bereits während des Fertigungsprozesses an der zentralen Einrichtung zur Verfügung stehen, ist es nicht mehr erforderlich abzuwarten, bis ein Fertigungsobjekt den gesamten Fertigungsprozeß durchlaufen hat. Die Planung von Nacharbeiten kann also bereits zu einem Zeitpunkt erfolgen, zu dem sich das Fertigungsobjekt noch innerhalb des Fertigungsprozesses befindet. Dies erleichtert die Planung von Nacharbeiten erheblich und führt zu einer Zeitersparnis und damit zu einer Kostenersparnis.

Das erfindungsgemäße Verfahren ist besonders vorteilhaft in der Serienfertigung von Kraftfahrzeugen verwendbar. Es ist jedoch auch bei der Serienfertigung beliebiger anderer Fertigungsobjekte, beispielsweise bei der Fertigung von elektronischen Geräten, verwendbar. Es ist somit vielfältig einsetzbar.

Die Datenerfassungseinrichtung kann einfach ausgebildet sein, beispielsweise durch einen einfachen handgehaltenen Computer. Da solche Computer langlebig und robust sind, können sie über einen langen Zeitraum verwendet werden, was sich im Hinblick auf die Kosten günstig auswirkt. Ein weiterer Vorteil des erfindungsgemäßen Verfahrens besteht darin, daß die fertigungsbezogenen Daten als elektronische Daten in der zentralen Einrichtung abgespeichert und archiviert werden können. Sämtliche Vorgänge, die bei dem bekannten Verfahren im Zusammenhang mit der Archivierung der Wagenbegleitkarte auftreten, können somit programmgesteuert erfolgen. Dies führt zu einer weiteren Zeit- und damit Kostenersparnis.

Eine zweckmäßige Weiterbildung der erfindungsgemäßen Lehre sieht vor, daß die Datenerfassungseinrichtung dem jeweiligen Fertigungsobjekt zu Beginn eines ersten vorbestimmten Fertigungsabschnittes zugeordnet wird und daß die Datenerfassungseinrichtung dem jeweiligen Fertigungsobjekt bis zu einem zweiten vorbestimmten Fertigungsabschnitt fest zugeordnet bleibt. Auf diese Weise ist zwischen dem ersten und dem zweiten vorbestimmten Fertigungsabschnitt eine feste Zuordnung der Datenerfassungseinrichtung zu dem jeweiligen Fertigungsobjekt sichergestellt, so daß durch Identifizierung der Datenerfassungseinrichtung das jeweilige Fertigungsobjekt identifizierbar ist.

Der erste und der zweite Fertigungsabschnitt sind entsprechend den jeweiligen Anforderungen wählbar. Zweckmäßigerweise befindet sich jedoch der erste Fertlgungsabschnitt in Durchlaufrichtung des Fertigungsobjektes durch die Fertigungsabschnitte in einem der ersten Fertigungsabschnitte und der zweite Fertigungsabschnitt in einem der letzten Fertigungsabschnitte. Umfaßt eine Serienfertigung von Kraftfahrzeugen beispielsweise die Fertigungsabschnitte Preßwerk, Rohbau, Lackiererei, verschiedene Abschnitte der Vormontage, verschiedene Abschnitte der Endmontage, die Qualitätssicherung und die Endkontrolle, so kann der erste Fertigungsabschnitt die Vormontage sein und der zweite Fertigungsabschnitt die Endkontrolle sein. Die Datenerfassungseinrichtung wird dann dem Fahrzeug nach Verlassen der Lackiererei zugeordnet, wobei diese Zuordnung bis zur Endkontrolle erhalten bleibt.

Eine andere Ausführungsform sieht Mittel vor, die die jeweils momentane Position der jeweiligen Datenerfassungseinrichtung bzw. des jeweiligen Fertigungsobjektes innerhalb der Serienfertigung feststellen, wobei wenigstens zeitweise Daten zu der zentralen Einrichtung übertragen werden, die die jeweils festge-stellte momentane Position der jeweiligen Datenerfassungseinrichtung bzw. des jeweiligen Fertigungsobjektes repräsentieren. Auf diese Weise ist ein bestimmtes Fertigungsobjekt von der zentralen Einrichtung aus jederzeit innerhalb der Fertigungsabschnitte lokalisierbar.

Eine Weiterbildung der vorgenannten Ausführungsform sieht vor, daß die Mittel, die die jeweils momentane Position der jeweiligen Datenerfassungseinrichtung bzw. des jeweiligen Fertigungsobjektes feststellen, mehrere zueinander beabstandet im Bereich der Fertigungsabschnitte angeordnete, ortsfeste Empfangseinrichtungen aufweisen, daß jede Datenerfassungseinrichtung wenigstens zeitweise ein Anmeldesignal aussendet, das beim Durchlaufen der Fertigungsabschnitte zeitlich aufeinanderfolgend von unterschiedlichen der ortsfesten Empfangseinrichtungen empfangen wird, derart, daß die momentane Position der jeweiligen Datenerfassungseinrichtung bzw. des jeweiligen Fertigungsobjektes dadurch feststellbar ist, daß festgestellt wird, durch welche der ortsfesten Empfangseinrichtungen das Anmeldesignal der jeweiligen Datenerfassungseinrichtungen momentan empfangen wird. Bei dieser Ausführungsform meldet sich jede Datenerfassungseinrichtung nach Art eines "Roaming-Verfahrens" bei den ortsfesten Empfangseinrichtungen an, wodurch in einfacher und zuverlässiger Weise feststellbar ist, wo sich ein Fertigungsobjekt mit der zugeordneten Datenerfassungseinrichtung momentan befindet.

Eine andere Weiterbildung sieht vor, daß zusammen mit den fertigungsbezogenen Daten oder getrennt hiervon Daten übertragen werden, die einen Code zur Identifizierung desjenigen Fertigungsobjektes und/oder derjenigen Datenerfassungseinrichtung enthalten, von dem bzw. von der die Daten stammen.

Eine andere Weiterbildung sieht vor, daß die fertigungsbezogenen Daten einen Code zur Identifizierung des Fertigungsabschnittes, in dem diese Daten eingegeben werden, und/oder einen Code zur Identifizierung eines in diesem Fertigungsabschnitt tätigen Werkers und/oder einen Code zur Identifizierung einer Gruppe von in diesem Fertigungsabschnitt tätigen Werkern enthalten. Auf diese Weise ist feststellbar, welcher Werker oder welche Gruppe von Werkern ein Bauteil oder eine Gruppe von Bauteilen eingebaut und gegebenenfalls beanstandet hat.

Die fertigungsbezogenen Daten können von der Datenerfassungseinrichtung zu der oder jeder zentralen Einrichtung leitungsgebunden oder leitungsungebunden, insbesondere per Funk oder Infrarotstrahlung, übertragen werden. Bei leitungsgebundener Übertragung können beispielsweise an einem Fließband elektrische Übertragungsleitungen vorgesehen sein, mit denen die Datenerfassungseinrichtung, beispielsweise über einen Stecker, verbunden wird. Die leitungsungebundene Übertragung, insbesondere per Funk, ist einfach, unkompliziert und störungssicher.

Zweckmäßigerweise werden die fertigungsbezogenen Daten während des Durchlaufens der Fertigungsabschnitte übertragen. Die Datenübertragung erfolgt also simultan mit dem Durchlaufen der Fertigungsabschnitte. Eine andere Weiterbildung der erfindungsgemäßen Lehre sieht vor, daß die Daten unmittelbar nach ihrer Eingabe in die Datenerfassungseinrichtung zu der zentralen Einrichtung übertragen werden. Die Daten stehen dann mit nur geringer zeitlicher Verzögerung nach ihrer Erfassung an der zentralen Einrichtung zur Verfügung.

Eine Ausführungsform sieht vor, daß die zu einem Fertigungsobjekt und/oder einem Fertigungsabschnitt gehörigen Daten in zeitlichem Zusammenhang mit dem Verlassen dieses Fertigungsabschnittes durch das Fertigungsobjekt, insbesondere beim oder kurz nach dem Verlassen dieses Fertigungsabschnittes, zu der zentralen Einrichtung übertragen werden. Auf diese Weise erfolgt immer dann eine Datenübertragung, wenn ein Fertigungsabschnitt abgeschlossen ist. Dies erleichtert die Planung von Nacharbeiten insbesondere dann, wenn mehrere miteinander in Zusammenhang stehende Nacharbeiten, die ein und denselben Fertigungsabschnitt betreffen, ausgeführt werden müssen.

Gemäß einer anderen Ausführungsform werden die Daten auf Anforderung der zentralen Einrichtung übertragen. Bei dieser Ausführungsform bestimmt also die zentrale Einrichtung den Zeitpunkt der Datenübertragung.

Gemäß einer anderen Ausführungsform ist an dem Fertigungsobjekt oder in räumlicher Nähe zu diesem eine Halterung für die Datenerfassungseinrichtung vorgesehen, wobei die Übertragung der Daten dadurch begonnen wird, daß die jeweilige Datenerfassungseinrichtung in die zugeordnete Halterung abgelegt wird. Diese Halterung kann nach Art einer Docking-Station ausgebildet sein, wobei die Datenübertragung jeweils beim Ablegen der Datenerfassungseinrichtung in die Docking-Station erfolgt.

Die fertigungsbezogenen Daten können beispielsweise Daten sein, die beliebige Informationen über den Zustand des Fertigungsobjektes und/oder über verwendete Bauteile enthalten. Beispielsweise können die Daten Informationen darüber enthalten, daß ein bestimmtes Bauteil oder eine bestimmte Gruppe von Bauteilen in funktionsfähigem und einwandfreiem Zustand eingebaut worden ist. Zweckmäßigerweise sind die fertigungsbezogenen Daten jedoch Daten, die das Vorliegen eines Fehlers an einem Bauteil und/oder die Art und/oder den Ort eines Fehlers an dem Bauteil und/oder den Ort eines Fehlers an dem Fertigungsobjekt und/oder das Fehlen eines Bauteiles repräsentieren. Bei dieser Ausführungsform folgt nur dann eine Eingabe fertigungsbezogener Daten in die Datenerfassungseinrichtung und eine Übertragung dieser Daten, wenn ein Fehler aufgetreten ist, während dann, wenn kein Fehler aufgetreten ist, keine Daten eingegeben bzw. übertragen werden. Dies verringert den Umfang der einzugebenden und zu übertragenden Daten und spart damit Zeit.

Die Datenerfassungseinrichtung kann entsprechend den jeweiligen Anforderungen eine beliebige Datenerfassungseinrichtung aufweisen. So können die Daten beispielsweise über eine Tastatur oder ein Tastenfeld in die Datenerfassungseinrichtung eingegeben werden.

Eine besonders zweckmäßige Weiterbildung sieht jedoch vor, daß die Daten über einen Touchscreen in die Datenerfassungseinrichtung eingegeben werden. Dies erleichtert die Dateneingabe und spart Zeit, da das Bedienen einer Tastatur oder eines Tastenfeldes grundsätzlich nicht mehr erforderlich ist.

Gemäß einer anderen Weiterbildung können die Daten mittels eines Scanners zum Scannen eines Barcodes in die Datenerfassungseinrichtung eingegeben werden. Diese Art und Weise der Dateneingabe ist besonders schnell und unkompliziert; sie setzt jedoch voraus, daß einem Werker, der die Daten eingibt, ein entsprechender Barcode zum Scannen zur Verfügung steht.

Zweckmäßigerweise weist die Datenerfassungseinrichtung zur Beobachtung und/oder Kontrolle der Dateneingabe eine Anzeigeeinrichtung auf. Auf diese Weise ist eine visuelle Kontrolle der Dateneingabe möglich, was die Gefahr von Eingabefehlern verringert.

Eine andere vorteilhafte Weiterbildung sieht vor, daß auf der Anzeigeeinrichtung oder dem Touchscreen wenigstens eine Eingabemaske dargestellt wird und daß die Dateneingabe durch Auswahl eines Elementes oder mehrerer Elemente der Eingabemaske erfolgt. Die Dateneingabe erfolgt also bei dieser Ausführungsform maskengesteuert, was die Bedienung erleichtert und Zeit spart.

Eine besonders vorteilhafte Weiterbildung der vorgenannten Ausführungsform sieht vor, daß in jedem Fertigungsabschnitt jeweils entsprechend den in diesem Fertigungsabschnitt verwendeten Bauteilen eine Eingabemaske auf der Anzeigeeinrichtung oder dem Touchscreen dargestellt wird. In der jeweiligen Eingabemaske werden dann nur diejenigen Punkte angeboten, die in dem speziellen Fertigungsabschnitt benötigt werden. Auf diese Weise ist die Dateneingabe weiter vereinfacht und die Gefahr von Eingabefehlern verringert.

Grundsätzlich ist es ausreichend, wenn anhand der an der zentralen Einrichtung zur Verfügung stehenden Daten erforderliche Nacharbeiten geplant werden. Eine besonders vorteilhafte Weiterbildung sieht jedoch vor, daß in der zentralen Einrichtung die von unterschiedlichen Fertigungsobjekten stammenden Daten ausgewertet werden und daß nach Auswertung der Daten Fehlerdaten erzeugt werden, die Informationen über das Auftreten von Fehlern an in der Serienfertigung verwendeten Bauteilen und/oder Gruppen von Bauteilen enthalten und daß die Fehlerdaten von der zentralen Einrichtung in Fertigungsbereiche übermittelt werden, in denen die jeweiligen Bauteile und/oder Gruppen von Bauteilen hergestellt und/oder vorbereitet und/oder bereitgestellt werden. Auf diese Weise erfolgt unmittelbar eine Rückmeldung in diejenigen Bereiche, aus denen fehlerhafte Bauteile oder Gruppen von Bauteilen stammen. In diesen Bereichen können dann entsprechende Vorkehrungen getroffen werden, um die aufgetretenen Fehler zu beseitigen und zu vermeiden. Die Auswertung kann entsprechend den jeweiligen Anforderungen in beliebiger Weise erfolgen. Es kann beispielsweise eine statistische Auswertung vorgenommen werden, die immer dann eine Rückmeldung erzeugt, wenn eine bestimmte Anzahl von Fehlern oder Fehler in einer bestimmten Reihenfolge aufgetreten sind.

Gemäß einer Ausführungsform wird in der Serienfertigung ein Fließband verwendet, wobei die unterschiedlichen Fertigungsabschnitte durch in Laufrichtung aufeinanderfolgende Bereiche des Fließbandes gebildet sind.

Zweckmäßigerweise sind die Datenerfassungseinrichtungen computergeschützte Datenerfassungseinrichtungen.

Die Erfindung wird nachfolgend anhand der beigefügten Zeichnung näher erläutert.

Es zeigt:
- Fig. 1: eine schematische Darstellung eines Ablaufes eines Fertigungsprozesses in der Fertigung von Kraftfahrzeugen, wobei das erfindungsgemäße Verfahren verwendet wird,
- Fig. 2: zur Verdeutlichung einer maskengesteuerten Dateneingabe ein auf einem Touch-screen einer Datenerfassungseinrichtung dargestellte Maske und
- Fig. 3: ein auf einem Touchscreen einer Datenerfassungseinrichtung dargestelltes schematisches Fahrzeug, das zur Kennzeichnung von Lackschäden an dem Fahrzeug dient, dem die betreffende Datenerfassungseinrichtung zugeordnet ist.

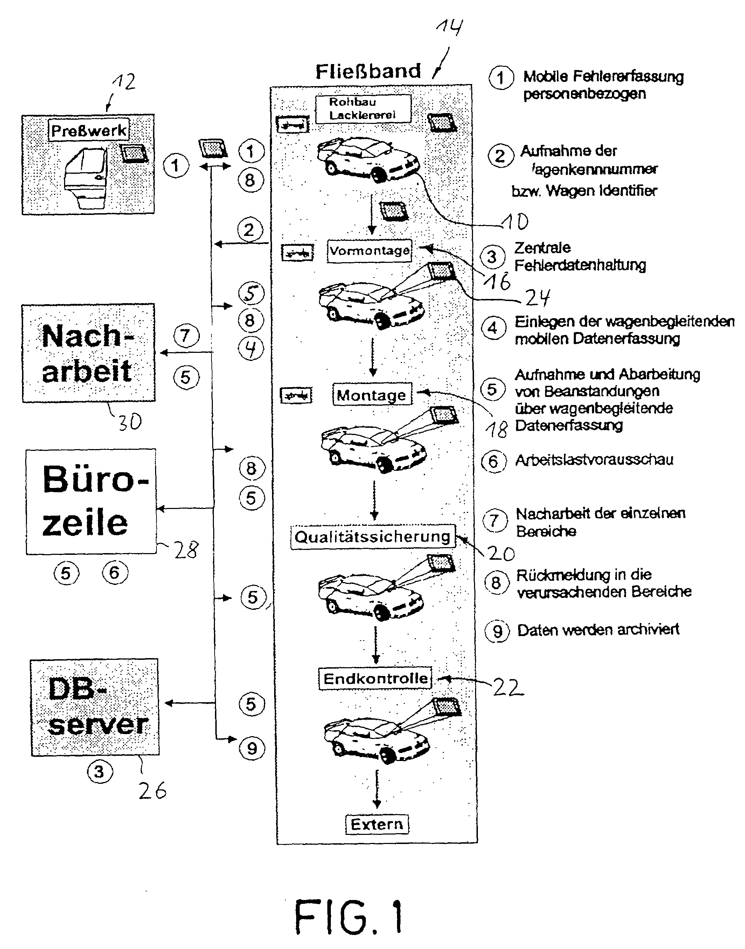

In Fig. 1 ist schematisch ein Ablauf einer Serienfertigung von Fertigungsobjekten dargestellt, die durch Kraftfahrzeuge 10 gebildet sind. Die Fertigungsobjekte durchlaufen hierbei unterschiedliche Fertigungsabschnitte, die bei diesem Ausführungsbeispiel durch Fertigungsabschnitte 12 (Preßwerk), 14 (Rohbau, Lackiererei), 16 (Vormontage), 18 (Montage), 20 (Qualitätssicherung) und 22 (Endkontrolle) gebildet sind, wobei jeder dieser Fertigungsabschnitte, insbesondere die Fertigungsabschnitte 16 (Vormontage) und 18 (Montage) in weitere Fertigungsabschnitte unterteilt sein können. In den Fertigungsabschnitten 12 bis 22, die durch unterschiedliche Bereiche eines in der Zeichnung nicht näher dargestellten Fließbandes gebildet sind, vollzieht sich die Fertigung der Kraftfahrzeuge 10, wobei in den einzelnen Abschnitten 12 bis 22 die jeweils erforderlichen Bauteile oder Baugruppen bereitgestellt und von Werkern eingebaut werden.

Erfindungsgemäß wird jedem Fertigungsobjekt eine Datenerfassungseinrichtung 24 zugeordnet, die bei diesem Ausführungsbeispiel durch einen in der Zeichnung nicht näher dargestellten, handgehaltenen Computer mit einem Touchscreen 32 gebildet ist und die eine Sende- und Empfangseinrichtung aufweist, die durch einen Funksender und -empfänger gebildet ist.

Die logische Zuordnung einer bestimmten Datenerfassungseinrichtung 24 zu einem bestimmten Kraftfahrzeug 10 erfolgt dadurch, daß eine Wagenkennummer dieses Kraftfahrzeugs in die Datenerfassungseinrichtung 24 eingegeben wird. Diese Eingabe kann beispielsweise über eine Tastatur oder einen Scanner erfolgen, mit dem ein an dem Kraftfahrzeug 10 angebrachter Barcode gescannt wird, der die Wagenkennnummer repräsentiert. Der Scanner kann getrennt von der Datenerfassungseinrichtung 24 in einer separaten Einrichtung angeordnet sein. Die Wagenkennummer wird dann in geeigneter Weise zur Zuordnung einer Datenerfassungseinrichtung 24 zu dem Fahrzeug zu der betreffenden Datenerfassungseinrichtung übermittelt. Die räumliche Zuordnung einer Datenerfassungseinrichtung 24 zu einem Kraftfahrzeug 10 erfolgt dadurch, daß an dem Kraftfahrzeug 10 oder in räumlicher Nähe hierzu eine Halterung nach Art einer Docking-Station vorgesehen ist, in die die Datenerfassungseinrichtung 24 abgelegt werden kann.

Bei dem in Fig. 1 dargestellten Ausführungsbeispiel wird dem Fertigungsobjekt (Kraftfahrzeug 10) zu Beginn eines ersten vorbestimmten Fertigungsabschnittes, der bei dem Ausführungsbeispiel durch den Fertigungsabschnitt 16 gebildet ist, eine Datenerfassungseinrichtung 24 zugeordnet, die dem Kraftfahrzeug bis zu einem zweiten vorbestimmten Fertigungsabschnitt, bei dem Ausführungsbeispiel dem Fertigungsabschnitt 22, fest zugeordnet bleibt und das Kraftfahrzeug 10 somit beim Durchlaufen der Fertigungsabschnitte 10 bis 22 begleitet.

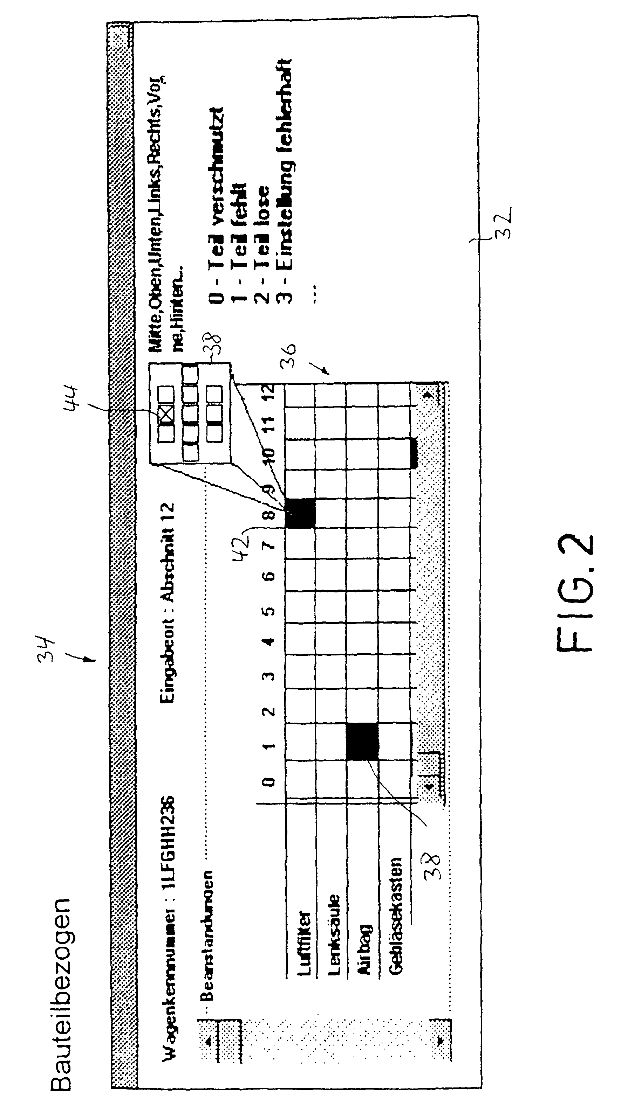

Stellt ein Werker fest, daß ein Bauteil oder eine Baugruppe einen Fehler aufweist, beispielsweise einen Funktionsfehler oder einen Fehler, der den optischen Eindruck stört, oder daß ein Bauteil oder eine Baugruppe vollständig fehlt, so gibt der betreffende Werker in weiter unten näher erläuterter Weise über den Touchscreen 32 der Datenerfassungseinrichtung 24, die dem betreffenden Kraftfahrzeug 10 zugeordnet ist, Daten in die Datenerfassungseinrichtung 24 ein, die das Vorliegen eines Fehlers an einem Bauteil und /oder die Art und/oder den Ort eines Fehlers an dem Bauteil und/oder den Ort eines Fehlers an dem Fertigungsobjekt und/oder das Fehlen eines Bauteiles repräsentieren. Die Art und Weise der Eingabe wird weiter unten unter Bezugnahme auf die Fig. 1 und 2 näher erläutert. Die auf diese Weise eingegebenen Daten werden von der Datenerfassungseinrichtung 24 durch Übertragungsmittel, die bei diesem Ausführungsbeispiel durch den Funksender gebildet sind, zu einer zentralen Einrichtung 26 übertragen, die die Daten mittels eines Funkempfängers empfängt. Zusammen mit den fertigungsbezogenen Daten wird bei diesem Ausführungsbeispiel ein Code zur Identifizierung der Datenerfassungseinrichtung 24 bzw. des Kraftfahrzeuges 10, dem diese Datenerfassungseinrichtung 24 zugeordnet ist, übertragen. Ferner werden Daten übertragen, die einen Code zur Identifizierung des Fertigungsabschnittes, in dem diese Daten eingegeben wurden, enthalten. Weiterhin können die Daten einen Code zur Identifizierung eines in diesem Fertigungsabschnitt tätigen Werkers und/oder einen Code zur Identifizierung einer Gruppe von in diesem Fertigungsabschnitt tätigen Werkern enthalten.

Die Übertragung der Daten kann unmittelbar nach deren Eingabe erfolgen. Sie kann jedoch auch beispielsweise dann erfolgen, wenn das jeweilige Kraftfahrzeug 10 einen der Fertigungsabschnitte 16 bis 22 verläßt und in den darauffolgenden Fertigungsabschnitt eintritt.

Auf diese Weise stehen für jedes der sich in dem Fertigungsprozeß befindenden Kraftfahrzeuge an der zentralen Einrichtung fertigungsbezogene Daten zur Verfügung, anhand derer gegebenenfalls erforderliche Nacharbeiten bereits zu einem Zeitpunkt geplant werden können, zu dem sich das betreffende Kraftfahrzeug noch innerhalb des Fertigungsprozesses in einem der Fertigungsabschnitte 16 bis 22 befindet. Dies erleichtert die Planung solcher Nacharbeiten erheblich und spart Kosten.

Dadurch, daß jede Datenerfassungseinrichtung 24 einem Kraftfahrzeug 10 fest zugeordnet ist, durchläuft sie die Fertigungsabschnitte zusammen mit dem Kraftfahrzeug 10. Es ist daher nicht erforderlich, daß die Werker eine Datenerfassungseinrichtung bei sich tragen. Die Datenerfassungseinrichtung kann entweder zur Eingabe aus dem Kraftfahrzeug 10 entnommen werden oder sogar an diesem verbleiben. Zusätzlich können, falls erforderlich, im Fertigungsprozeß jedoch noch Werker vorgesehen sein, die stets eine Datenerfassungseinrichtung 24 bei sich tragen. Zur Identifizierung des Kraftfahrzeugs gibt in diesem Falle der Werker vor Beginn der Dateneingabe die dem Kraftfahrzeug zugeordnete Wagenkennummer ein.

Die Dateneingabe in die Datenerfassungseinrichtung 24 erfolgt in einfacher und schneller Weise.

Die fertigungsbezogenen Daten können in der zentralen Einrichtung 26 programmgesteuert archiviert werden. Ferner können die von unterschiedlichen Datenerfassungseinrichtungen 24 und damit von unterschiedlichen Fertigungsobjekten stammenden Daten in der zentralen Einrichtung 26 ausgewertet werden, wobei nach der Auswertung der Daten Fehlerdaten erzeugt werden können, die Informationen über das Auftreten von Fehlern an in der Serienfertigung verwendeten Bauteilen und/oder Gruppen von Bauteilen enthalten. Diese Fehlerdaten können dann, beispielsweise ebenfalls per Funk, von der zentralen Einrichtung in Fertigungsbereiche, beispielsweise in die Lackiererei 14 oder das Preßwerk 12 übermittelt werden, in denen die jeweiligen Bauteile und/oder Gruppen von Bauteilen hergestellt und/oder vorbereitet und/oder bereitgestellt werden. Auf diese Weise können in den jeweiligen Fertigungsbereichen Maßnahmen getroffen werden, um die aufgetretenen Fehler oder Engpässe zu beseitigen.

Auch nach erfolgter Datenübertragung stehen die Daten an der Datenerfassungseinrichtung 24 weiter zur Verfügung. Sie können daher entweder an der Datenerfassungseinrichtung durch einen Werker jederzeit abgerufen oder, beispielsweise nach einer entsprechenden Anforderung der zentralen Einrichtung 26, erneut zu dieser übertragen werden.

Die von der zentralen Einrichtung 26 ausgewerteten Daten können auch in Bereiche 28 bzw. 30 übertragen werden, in denen erforderliche Nacharbeiten geplant bzw. ausgeführt werden.

In Fig. 2 ist schematisch ein Touchscreen 32 der Datenerfassungseinrichtung 24 dargestellt, auf dem bei Betrieb eine Maske 34 dargestellt wird.

Bei dem Ausführungsbeispiel erfolgt die Steuerung der Maske 34 derart, daß durch nicht dargestellte Mittel festgestellt wird, in welchem der Fertigungsabschnitte 12 bis 22 sich das Kraftfahrzeug 10, dem diese Datenerfassungseinrichtung 24 zugeordnet ist, befindet. Es wird dann für jeden Fertigungsabschnitt eine individuelle Maske 34 dargestellt, in dem nur für diejenigen Bauteile bzw. Baugruppen Eingabemöglichkeiten zur Verfügung gestellt werden, die in diesem Fertigungsabschnitt eingebaut werden. Auf diese Weise ist die Dateneingabe einfach gestaltet und die Gefahr von Fehleingaben verringert.

In Fig. 2 ist eine Eingabemaske für den Fertigungsabschnitt 16 dargestellt, die in einer Matrix 36 angeordnete Felder aufweist, wobei die Zeilen der Matrix unterschiedlichen Bauteilen, beispielsweise dem Luftfilter, zugeordnet sind und die Spalten der Matrix unterschiedlichen Fehlerarten zugeordnet sind. Bei dem Ausführungsbeispiel gemäß Fig. 2 sind zwölf unterschiedliche Fehlerarten vorgesehen, wobei die Fehlerart "1" beispielsweise dafür steht, daß das betreffende Bauteil fehlt.

Stellt ein Werker in dem Fertigungsabschnitt 16 beispielsweise fest, daß der Airbag fehlt, so berührt er mit einem nicht dargestellten Touchscreen 32 in der Matrix 36 dasjenige Feld, das dem Bauteil "Airbag" und der Fehlerart "1" (Teil fehlt) zugeordnet ist. Dieses Feld ist in Fig. 2 durch ein schwarzes Quadrat 38 symbolisiert. Die entsprechenden Daten werden dann zu der zentralen Einrichtung 26 übertragen.

Gegebenenfalls kann sich bei Berühren eines der Felder der Matrix 36 eine Auswahlmaske 38 öffnen, wie dies in Fig. 2 für das Feld 42 dargestellt ist, das dem Bauteil "Luftfilter" und der Fehlerart "8" zugeordnet ist. Die Auswahlmaske 38 kann weitere Auswahlmöglichkeiten bieten, um beispielsweise den Ort eines Fehlers an einem Bauteil näher zu kennzeichnen. Die Auswahlmaske 38 kann so aufgebaut sein, daß sich der Ort des Fehlers an dem Bauteil durch Berühren eines einzigen Feldes der Auswahlmaske 38 eingeben läßt, wie dies in Fig. 2 durch ein Kreuz 44 symbolisiert ist.

Auf dem Touchscreen 32 können noch weitere Daten angezeigt sein, beispielsweise eine Kennummer des Kraftfahrzeugs und der Eingabeort, also der Fertigungsabschnitt, wie dies in Fig. 2 dargestellt ist.

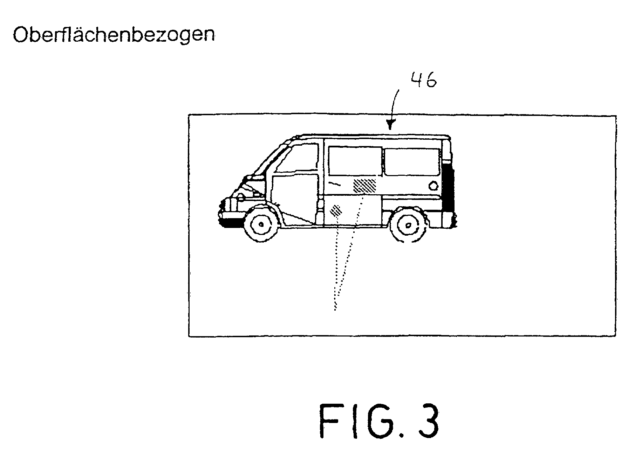

Falls es beispielsweise bei Lackfehlern erforderlich ist, den Ort des Fehlers näher zu kennzeichnen, so kann auf dem Touchscreen 32 eine schematische Ansicht 46 des Fahrzeugs 10 angezeigt werden, wie dies in Fig. 3 dargestellt ist. Der Ort von Lackfehlern läßt sich dann durch Berühren entsprechender Teile der Darstellung 46 des Fahrzeugs 10 kennzeichnen, wobei in zu Fig. 2 entsprechender Weise beim Berühren des Touchscreens 32 ein Auswahlmaske erscheinen kann, in dem der Lackfehler noch näher spezifiziert werden kann, beispielsweise dahingehend, ob es sich um einen Kratzer, eine Beule oder eine Delle handelt.

## Patentansprüche

1. Verfahren zur Bereitstellung von fertigungsbezogenen Daten in einer Serienfertigung von Fertigungsobjekten (10), insbesondere von Kraftfahrzeugen,
wobei jedem Fertigungsobjekt (10) eine das Fertigungsobjekt (10) begleitende, von einem Werker bedienbare Datenerfassungseinrichtung (24) zugeordnet wird, in die über eine an der Datenerfassungseinrichtung (24) angeordnete Eingabeeinrichtung fertigungsbezogene Daten eingegeben werden,
wobei in wenigstens einem Teil von Fertigungsabschnitten (16-22) der Serienfertigung von einem Werker fertigungsbezogene Daten in die Datenerfassungseinrichtung (24) eingegeben werden, und
wobei die Daten während des Fertigungsprozesses wenigstens teilweise von der jeweiligen Datenerfassungseinrichtung (24) zu wenigstens einer zentralen Einrichtung (26) übertragen werden.

2. Verfahren nach Anspruch 1, **dadurch gekennzeichnet, daß** die Datenerfassungseinrichtung (24) dem jeweiligen Fertigungsobjekt (10) zu Beginn eines ersten vorbestimmten Fertigungsabschnittes (16) zugeordnet wird und daß die Datenerfassungseinrichtung (24) dem jeweiligen Fertigungsobjekt (10) bis zu einem zweiten vorbestimmten Fertigungsabschnitt (22) fest zugeordnet bleibt.

3. Verfahren nach Anspruch 2, **dadurch gekennzeichnet, daß** sich der erste vorbestimmte Fertigungsabschnitt (16) in Durchlaufrichtung des Fertigungsobjektes (10) durch die Fertigungsabschnitte (12-22) unter einem der ersten Fertigungsabschnitte befindet und daß sich der zweite vorbestimmte Fertigungsabschnitt (22) unter einem der letzten Fertigungsabschnitte befindet.

4. Verfahren nach einem der vorhergehenden Ansprüche, **dadurch gekennzeichnet, daß** Mittel vorgesehen sind, die die jeweils momentane Position der jeweiligen Datenerfassungseinrichtung bzw. des jeweiligen Fertigungsobjektes (10) innerhalb der Serienfertigung feststellen und daß wenigstens zeitweise Daten zu der zentralen Einrichtung (26) übertragen werden, die die jeweils festgestellte momentane Position der jeweiligen Datenerfassungseinrichtung (24) bzw. des jeweiligen Fertigungsobjektes (10) repräsentieren.

5. Verfahren nach Anspruch 4, **dadurch gekennzeichnet, daß** die Mittel, die die jeweils momentane Position der jeweiligen Datenerfassungseinrichtung (24) bzw. des jeweiligen Fertigungsobjektes (10) feststellen, mehrere zueinander beabstandet im Bereich der Fertigungsabschnitte (12-22) angeordnete ortsfeste Empfangseinrichtungen aufweisen, daß die jeweilige Datenerfassungseinrichtung (24) wenigstens zeitweise ein Anmeldesignal aussendet, das beim Durchlaufen der Fertigungsabschnitte (12-22) zeitlich aufeinanderfolgend von unterschiedlichen der ortsfesten Empfangseinrichtungen empfangen wird, derart, daß die jeweils momentane Position jeder Datenerfassungseinrichtung (24) bzw. jedes Fertigungsobjektes dadurch feststellbar ist, daß festgestellt wird, durch welche der ortsfesten Empfangseinrichtungen das Anmeldesignal der jeweiligen Datenerfassungseinrichtung (24) momentan empfangen wird.

6. Verfahren nach einem der vorhergehenden Ansprüche, **dadurch gekennzeichnet, daß** zusammen mit den fertigungsbezogenen Daten oder getrennt hiervon Daten übertragen werden, die einen Code zur Identifizierung desjenigen Fertigungsobjektes (10) und/oder derjenigen Datenerfassungseinrichtung (24) enthalten, von dem bzw. von der die Daten stammen.

7. Verfahren nach einem der vorhergehenden Ansprüche, **dadurch gekennzeichnet, daß** die fertigungsbezogenen Daten einen Code zur Identifizierung des Fertigungsabschnittes (12-22), in dem diese Daten eingegeben werden, und/oder einen Code zur Identifizierung eines in diesem Fertigungsabschnitt (12-22) tätigen Werkers und/oder einen Code zur Identifizierung einer Gruppe von in diesem Fertigungsabschnitt (12-22) tätigen Werkern enthalten.

8. Verfahren nach einem der vorhergehenden Ansprüche, **dadurch gekennzeichnet, daß** die Daten von der Datenerfassungseinrichtung (24) zu der oder jeder zentralen Einrichtung (26) leitungsgebunden oder leitungsungebunden, insbesondere per Funk oder per Infrarotstrahlung übertragen werden.

9. Verfahren nach einem der vorhergehenden Ansprüche,
**dadurch gekennzeichnet, daß** die Daten während des Durchlaufens der Fertigungsabschnitte (12-22) übertragen werden.

10. Verfahren nach einem der vorhergehenden Ansprüche, **dadurch gekennzeichnet, daß** die Daten unmittelbar nach ihrer Eingabe in die Datenerfassungseinrichtung (24) zu der zentralen Einrichtung (26) übertragen werden.

11. Verfahren nach einem der vorhergehenden Ansprüche, **dadurch gekennzeichnet, daß** die zu einem Fertigungsobjekt (10) und/oder einem Fertigungsabschnitt (12-22) gehörigen Daten in zeitlichem Zusammenhang mit dem Verlassen dieses Fertigungsabschnittes (12-22) durch das Fertigungsobjekt (10), insbesondere beim oder kurz nach dem Verlassen dieses Fertigungsabschnittes (12-22), zu der zentralen Einrichtung übertragen werden.

12. Verfahren nach einem der vorhergehenden Ansprüche, **dadurch gekennzeichnet, daß** die Daten auf Anforderung der zentralen Einrichtung (26) übertragen werden.

13. Verfahren nach einem der vorhergehenden Ansprüche, **dadurch gekennzeichnet, daß** an dem Fertigungsobjekt (10) oder in räumlicher Nähe zu diesem eine Halterung für die zugeordnete Datenerfassungseinrichtung (24) vorgesehen ist und daß die Übertragung der Daten dadurch begonnen wird, daß die Datenerfassungseinrichtung (24) in die zugeordnete Halterung abgelegt wird.

14. Verfahren nach einem der vorhergehenden Ansprüche, **dadurch gekennzeichnet, daß** die fertigungsbezogenen Daten Daten sind, die das Vorliegen eines Fehlers an einem Bauteil und/oder die Art und/oder den Ort eines Fehlers an dem Bauteil und/oder den Ort eines Fehlers an dem Fertigungsobjekt und/oder das Fehlen eines Bauteiles repräsentieren.

15. Verfahren nach einem der vorhergehenden Ansprüche, **dadurch gekennzeichnet, daß** die Daten über eine Tastatur oder ein Tastenfeld in die Datenerfassungseinrichtung (24) eingegeben werden.

16. Verfahren nach einem der vorhergehenden Ansprüche, **dadurch gekennzeichnet, daß** die Daten über einen Touchscreen (32) in die Datenerfassungseinrichtung (24) eingegeben werden.

17. Verfahren nach einem der vorhergehenden Ansprüche, **dadurch gekennzeichnet, daß** die Daten mittels eines Scanners zum Scannen eines Barcodes in die Datenerfassungseinrichtung (24) eingegeben werden.

18. Verfahren nach einem der vorhergehenden Ansprüche, **dadurch gekennzeichnet, daß** zur Beobachtung und/oder Kontrolle der Dateneingabe an der Datenerfassungseinrichtung (24) eine Anzeigeeinrichtung vorgesehen ist.

19. Verfahren nach einem der Ansprüche 16 bis 18, **dadurch gekennzeichnet, daß** auf der Anzeigeeinrichtung oder dem Touchscreen (32) wenigstens eine Eingabemaske dargestellt wird und daß die Dateneingabe durch Auswahl eines Elementes oder mehrerer Elemente der Eingabemaske erfolgt.

20. Verfahren nach Anspruch 19, **dadurch gekennzeichnet, daß** in jedem Fertigungsabschnitt (12-22) jeweils entsprechend den in diesem Fertigungsabschnitt (12-22) verwendeten Bauteilen eine individuelle Eingabemaske auf der Anzeigeeinrichtung dargestellt wird.

21. Verfahren nach einem der vorhergehenden Ansprüche, **dadurch gekennzeichnet, daß** in der zentralen Einrichtung (26) die von Fertigungsobjekten (10) stammenden Daten ausgewertet werden und daß nach Auswertung der Daten Pehlerdaten erzeugt werden, die Informationen über das Auftreten von Fehlern an in der Serienfertigung verwendeten Bauteilen und/oder Gruppen von Bauteilen enthalten, und daß die Fehlerdaten von der zentralen Einrichtung (26) in Fertigungsbereiche übermittelt werden, in denen die jeweiligen Bauteile und/oder Gruppen von Bauteilen hergestellt und/oder vorbereitet und/oder bereitgestellt werden.

22. Verfahren nach einem der vorhergehenden Ansprüche, **dadurch gekennzeichnet, daß** in der Serienfertigung ein Fließband verwendet wird und daß die unterschiedlichen Fertigungsabschnitte durch in Laufrichtung aufeinanderfolgende Bereiche des Fließbandes gebildet sind.

23. Verfahren nach einem der vorhergehenden Ansprüche, **dadurch gekennzeichnet, daß** die Datenerfassungseinrichtungen (24) computergestützte Datenerfassungseinrichtungen sind.

## Claims

1. A method for providing manufacturing-related data in mass production of manufactured objects (10), in particular motor vehicles,
whereby a data acquisition device (24), which accompanies the manufactured object (10) and can be operated by a worker, and into which manufacturing-related data is inputted via an input device disposed on the data acquisition device (24), is associated with each manufactured object (10),
whereby manufacturing-related data is inputted into the data acquisition device (24) by a worker in at least one part of manufacturing stages (16-22) of the mass production, and
whereby the data is transferred during the manufacturing process at least partially from the respective data acquisition device (24) to at least one central device (26).

2. A method according to Claim 1,
**characterised in that** the data acquisition device (24) is associated with the respective manufactured object (10) at the start of a first predetermined manufacturing stage (16)
**and in that** the data acquisition device (24) remains permanently associated with the respective manufactured object (10) up to a second predetermined manufacturing stage (22).

3. A method according to Claim 2,
**characterised in that** the first predetermined manufacturing stage (16) is situated beneath one of the first manufacturing stages in the direction of travel of the manufactured object (10) through the manufacturing stages (12-22)
**and in that** the second predetermined manufacturing stage (22) is situated beneath one of the last manufacturing stages.

4. A method according to one of the preceding Claims,
**characterised in that** means are provided which ascertain the respective instantaneous position of the respective data acquisition device or of the respective manufactured object (10) within the mass production
**and in that** data, which represents the respectively ascertained instantaneous position of the respective data acquisition device (24) or of the respective production object (10), is transferred at least intermittently to the central device (26).

5. A method according to Claim 4,
**characterised in that** the means which ascertain the respective instantaneous position of the respective data acquisition device (24) or of the respective manufactured object (10) comprise several fixed receiving devices disposed spaced from one another in the region of the manufacturing stages (12-22),
**in that** the respective data acquisition device (24) emits at least intermittently a log-on signal, which while passing through the manufacturing stages (12-22) is received following one another in time by different ones of the fixed receiving devices in such a manner that the respective instantaneous position of each data acquisition device (24) or of each manufactured object can be ascertained by the fact that it is ascertained by which of the fixed receiving devices the log-on signal of the respective data acquisition device (24) is momentarily received.

6. A method according to one of the preceding Claims,
**characterised in that** data containing a code for identifying the manufactured object (10) and/or the data acquisition device (24) from which the data originates is transmitted together with the manufacturing-related data or separately therefrom.

7. A method according to one of the preceding Claims,
**characterised in that** the manufacturing-related data contains a code for the identification of the manufacturing stage (12-22) in which this data is inputted, and/or a code for the identification of-a worker occupied in this manufacturing stage (12-22) and/or a code for the identification of a group of workers occupied in this manufacturing stage (12-22).

8. A method according to one of the preceding Claims,
**characterised in that** the data is transferred from the data acquisition device (24) to the or to each central device (26) in the conducted or non-conducted state, in particular by radio or by infrared radiation.

9. A method according to one of the preceding Claims,
**characterised in that** the data is transferred as the manufacturing stages (12-22) are passed through.

10. A method according to one of the preceding Claims,
**characterised in that** the data is transferred to the central device (26) directly after its input into the data acquisition device (24).

11. A method according to one of the preceding Claims,
**characterised in that** the data belonging to a manufactured object (10) and/or a manufacturing stage (12-22) is transmitted to the central device in temporal relationship with the manufactured object (10) leaving this manufacturing stage (12-22), in particular during or shortly after it leaves this manufacturing stage (12-22).

12. A method according to one of the preceding Claims,
**characterised in that** the data is transmitted on request to the central device (26).

13. A method according to one of the preceding Claims,
**characterised in that** at the manufactured object (10) or in spatial proximity thereto a mounting is provided for the associated data acquisition device (24)
**and in that** the transmission of data is started by the data acquisition device (24) being deposited in the associated mounting.

14. A method according to one of the preceding Claims,
**characterised in that** the manufacturing-related data is data which represents the presence of a fault at a component and/or the type and/or the location of a fault at the component and/or the location of a fault at the manufactured object and/or the absence of a component.

15. A method according to one of the preceding Claims,
**characterised in that** the data is inputted into the data acquisition device (24) via a keyboard or a keypad.

16. A method according to one of the preceding Claims,
**characterised in that** the data is inputted into the data acquisition device (24) via a touch screen (32).

17. A method according to one of the preceding Claims,
**characterised in that** the data is inputted into the data acquisition device (24) by means of a scanner for scanning a bar code.

18. A method according to one of the preceding Claims,
**characterised in that** a display device is provided for observing and/or controlling the data input at the data acquisition device (24).

19. A method according to one of Claims 16 to 18,
**characterised in that** at least one input mask is represented on the display device or the touch screen (32)
and **in that** the data input takes place by selecting one element or several elements of the input mask.

20. A method according to Claim 19,
**characterised in that** in each manufacturing stage (12-22), in each case corresponding to the components used in this manufacturing stage (12-22), an individual input mask is represented on the display device.

21. A method according to one of the preceding Claims,
**characterised in that** the data originating from manufactured objects (10) is evaluated in the central device (26)
**and in that,** after the evaluation of the data, error data is produced, which contains information on the occurrence of faults on components and/or groups of components used in the mass production,
**and in that** the error data is transmitted by the central device (26) into manufacturing areas in which the respective components and/or groups of components are manufactured and/or prepared and/or made available.

22. A method according to one of the preceding Claims,
**characterised in that** an assembly line is used in the mass production
**and in that** the different manufacturing stages are formed by areas of the assembly line following one another in the direction of travel.

23. A method according to one of the preceding Claims,
**characterised in that** the data acquisition devices (24) are computer-aided data acquisition devices.

## Revendications

1. Procédé permettant de fournir des données relatives à la fabrication dans une fabrication en série d'objets (10) en fabrication, en particulier des véhiculas automobiles, dans lequel :
à chaque objet (10) en fabrication est affecté un dispositif de saisie de données (24), accompagnant l'objet (10) en fabrication, utilisable par un ouvrier, dans lequel des données relatives à la fabrication sont introduites par un dispositif d'entrée disposé sur le dispositif de saisie de données (24),
dans au moins une partie des sections de fabrication (16-22) de la fabrication en série, des données relatives à la fabrication sont entrées dans le dispositif de saisie de données (24) par un ouvrier et
les données pendant le processus de fabrication sont transmises au moins en partie depuis le dispositif de saisie de données (24) vers au moins un dispositif central (26).

2. Procédé selon la revendication 1,
**caractérisé en ce que** le dispositif de saisie de données (24) est affecté à chaque objet (10) en fabrication au début d'une première section de fabrication prédéterminée et **en ce que** le dispositif de saisie de données (24) reste affecté à chaque objet (10) en fabrication jusqu'à une deuxième section de fabrication (22) prédéterminée.

3. Procédé selon la revendication 2,
**caractérisé en ce que** la première section de fabrication (16) prédéterminée se trouve dans le sens de parcours de l'objet (10) en fabrication à travers les sections de fabrication (12-22) au-dessous d'une des premières sections de fabrication et **en ce que** la deuxième section de fabrication prédéterminée (22) se trouve au-desous d'une des dernières sections de fabrication.

4. Procédé selon l'une des revendications précédentes,
**caractérisé en ce qu'**on prévoit des moyens qui déterminent la position momentanée selon le cas du dispositif de saisie de données respectif ou de l'objet (10) en fabrication respectif dans le courant de la fabrication en série et **en ce qu'**au moins par moment des données sont transmises au dispositif central (26) qui représentent les positions momentanées déterminées du dispositif de saisie de données (24) respectif ou l'objet (10) en fabrication respectif.

5. Procédé selon la revendication 4,
**caractérisé en ce que** les moyens qui déterminent la position momentanée du dispositif de saisie de données (24) respectif ou de l'objet (10) en fabrication respectif, présentent plusieurs dispositifs de réception fixes espacés les uns des autres dans la zone des sections de fabrication (12-22), et **en ce que** le dispositif de saisie de données (24) respectif émet au moins par moment un signal de demande qui est reçu lors du passage aux sections de fabrication (12-22) successivement dans le temps par différents dispositifs de réception fixes, de telle sorte que la position momentanée respective de chaque dispositif de saisie de données (24) respectif ou de chaque objet en fabrication respectif est déterminable **en ce qu'**on détermine au moyen duquel des dispositifs de réception fixes le signal de demande du dispositif de saisie de données respectif est reçu à cet instant.

6. Procédé selon l'une des revendications précédentes,
**caractérisé en ce que**, avec les données relatives à la fabrication ou étrangères à celle-ci, sont envoyées des données qui contiennent un code d'identification de l'objet (10) en fabrication et/ou du dispositif de saisie de données (24), dont proviennent les données.

7. Procédé selon l'une des revendications précédentes,
**caractérisé en ce que** les données relatives à la fabrication comprennent un code d'identification de la section de fabrication (12-22) depuis laquelle ces données sont entrées, et/ou un code d'identification d'un ouvrier actif dans cette section de fabrication (12-22) et/ou un code d'identification d'un groupe d'ouvriers actifs dans cette section de fabrication (12-22).

8. Procédé selon l'une des revendications précédentes,
**caractérisé en ce que** les données sont transmises du dispositif de saisie de données (24) au ou à chaque dispositif central (26) par fil ou sans fil, en particulier par radio ou par rayonnement infrarouge.

9. Procédé selon l'une des revendications précédentes,
**caractérisé en ce que** les données sont transmises durant le passage dans les sections de fabrication (12-22).

10. Procédé selon l'une des revendications précédentes,
**caractérisé en ce que** les données sont transmises directement après leur entrée dans le dispositif de saisie de données (24) au dispositif central (26).

11. Procédé selon l'une des revendications précédentes,
**caractérisé en ce que** le données appartenant à un objet (10) en fabrication et/ou à une section de fabrication (12-22) sont transmises au dispositif central en relation avec l'instant de sortie de l'objet (10) en fabrication de la section de fabrication (12-22), notamment lors de la sortie de cette section de fabrication (12-22) ou peu de temps après.

12. Procédé selon l'une des revendications précédentes,
**caractérisé en ce que** les données sont transmises sur demande du dispositif central (26).

13. Procédé selon l'une des revendications précédentes,
**caractérisé en ce que**, sur l'objet (10) en fabrication ou au voisinage immédiat de celui-ci, est prévu un support pour le dispositif de saisie de données concerné (24) et **en ce que** la transmission des données est commencée par le fait que le dispositif de saisie des données (24) est déposé dans le support concerné.

14. Procédé selon l'une des revendications précédentes,
**caractérisé en ce que** les données relatives à la fabrication sont des données qui représentent l'existence d'un défaut sur une pièce de construction et/ou le type et/ou l'emplacement d'un défaut sur le composant et/ou l'emplacement d'un défaut sur l'objet à fabriquer et/ou l'absence d'un composant.

15. Procédé selon l'une des revendications précédentes,
**caractérisé en ce que** les données sont entrées dans le dispositif de saisie de données (24) au moyen un clavier ou d'un panneau à touches.

16. Procédé selon l'une des revendications précédentes,
**caractérisé en ce que** les données sont entrées dans le dispositif de saisie de données (24) au moyen d'un écran tactile (32).

17. Procédé selon l'une des revendications précédentes,
**caractérisé en ce que**
les données sont entrées au moyen d'un scanner de code barre dans le dispositif de saisie de données (24).

18. Procédé selon l'une des revendications précédentes,
**caractérisé en ce que**, pour l'observation et/ou le contrôle de l'entrée des données, un dispositif d'affichage est prévu sur le dispositif de saisie de données (24).

19. Procédé selon l'une des revendications 16 à 18,
**caractérisé en ce que**, sur le dispositif d'affichage ou sur l'écran tactile (32) au moins un masque de saisie est représenté et **en ce que** l'entrée de données intervient par sélection d'un élément ou de plusieurs éléments du masque de saisie.

20. Procédé selon la revendication 19,
**caractérisé en ce que**, dans chaque section de fabrication (12-22), est représenté sur le dispositif d'affichage, un masque de saisie individuel correspondant respectivement aux composants utilisés dans cette section de fabrication (12-22).

21. Procédé selon l'une des revendications précédentes,
**caractérisé en ce que**, dans le dispositif central (26), les données provenant des objets (10) en fabrication sont évaluées et **en ce que**, après évaluation des données, on génère des données de défaut qui contiennent des informations sur la survenance des défauts sur les composants et/ou groupes de composants, utilisées dans la fabrication en série et **en ce que** les données de défaut sont transmises du dispositif central (26) aux sections de fabrication dans lesquelles les composants et/ou groupes de composants respectifs sont fabriqués et/ou préparés et/ou mis à disposition.

22. Procédé selon l'une des revendications précédentes,
**caractérisé en ce que**, dans la fabrication en série, une chaîne de fabrication est utilisée et **en ce que** les différences sections de fabrication sont formées de zones de la chaîne de fabrication se suivant les unes les autres dans le sens de déplacement.

23. Procédé selon l'une des revendications précédentes,
**caractérisé en ce que** les dispositifs de saisies de données (24) sont des dispositifs de saisie de données assistés par ordinateur.
